(19) **Europäisches Patentamt / European Patent Office / Office européen des brevets**

(11) **EP 3 683 192 A1**

(12) **EUROPEAN PATENT APPLICATION**

(43) Date of publication:
**22.07.2020 Bulletin 2020/30**

(21) Application number: **20151809.9**

(22) Date of filing: **14.01.2020**

(51) Int Cl.:
*C02F 1/467* (2006.01)  *C02F 1/00* (2006.01)
*C02F 1/76* (2006.01)  *C02F 1/68* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2019  US 201962792953 P**

(71) Applicant: **Envirocleanse LLC**
**Katy, TX 77450 (US)**

(72) Inventors:
• HENRY, Kent D.
  Laramie, Wyoming 82072 (US)
• STANKA, James
  Katy, Texas 77450 (US)
• HUGHES, Matt
  Katy, Texas 77450 (US)
• WAID, Charlie Robert, VI
  Katy, Texas 77450 (US)

(74) Representative: **Strachan, Victoria Jane et al**
**Mathys & Squire LLP**
**The Shard**
**32 London Bridge Street**
**London SE1 9SG (GB)**

(54) **BALLAST WATER TREATMENT METHOD**

(57)  The present invention relates to a ballast water treatment method. The ballast water treatment system used in the method comprises of at least one ballast tank, at least one mixing nozzle, a treatment unit, wherein the treatment unit comprises an electrochlorination module and a dechlorination module, a dosing module, wherein the dosing module is coupled to the treatment unit, and a control system. The method comprises introducing ballast water into at least one ballast tank disposed on the vessel, circulating at least a portion of the ballast water between the at least one ballast tank and a dosing module, generating a disinfectant via a treatment unit, wherein the treatment unit comprises an electrochlorination unit and a dechlorination module, and delivering the disinfectant from the treatment unit to the circulating ballast water at the dosing module.

FIG. 1

EP 3 683 192 A1

**Description**

**CROSS-REFERENCE TO RELATED APPLICATIONS**

This application is a nonprovisional application claiming priority to U.S. Application Serial No. 62/792,953 filed on January 16, 2019, which is herein incorporated by reference in its entirety.

**FIELD OF THE INVENTION**

The present invention relates to a system and method for treating ballast water while a vessel is in transit.

**BACKGROUND**

Vessels may adhere to certain regulations when entering and leaving a port. Typically, these regulations pertain to the quality of the ballast water contained within each vessel. Instances have occurred wherein a vessel uptakes ballast water from one port and discharges either to the ocean and/or at a subsequent port. At times, matter contained within that ballast water, especially biological matter, may negatively affect the new environment. Local and international regulations have been put into place to prevent contamination from the ballast water transferred during voyages. These regulations may ascribe to an operator of the vessel which procedures to take and/or how to clean the ballast water prior to discharge. Current ballast water treatment systems by and far focus on the treatment of the ballast water during periods of time when the vessel is performing port operations; treating at such time increases personnel and resource requirements to the ship operations when such are already in short supply and high demand.

Therefore, a need exists in the field for an improved method and system to treat ballast water that optimizes personnel and resource utilization. Further, the method and system may reduce downtime, thereby increasing savings.

**BRIEF SUMMARY OF THE INVENTION**

The present invention relates to a system and method for treating ballast water. More particularly, the method and system may be operational while a vessel is in transit.

These and other needs in the art are addressed in one embodiment by a ballast water treatment system, comprising at least one ballast tank, at least one mixing nozzle, a treatment unit, wherein the treatment unit comprises an electrochlorination module and a dechlorination module, a dosing module, wherein the dosing module is coupled to the treatment unit, and a control system.

These and other needs in the art are addressed in one embodiment by a method for treating ballast water on a vessel comprising introducing ballast water into at least one ballast tank disposed on the vessel, circulating at least a portion of the ballast water between the at least one ballast tank and a dosing module, generating a disinfectant via a treatment unit, wherein the treatment unit comprises an electrochlorination module and a dechlorination module, and delivering the disinfectant from the treatment unit to the circulating ballast water at the dosing module.

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such equivalent embodiments do not depart from the spirit and scope of the invention as set forth in the appended claims.

**BRIEF DESCRIPTION OF THE DRAWINGS**

A more complete and thorough understanding of the present embodiments and advantages thereof may be acquired by referring to the following description taken in conjunction with the accompanying drawings.

FIG. 1 is an illustration of an electrochlorination module in accordance with certain embodiments of the present disclosure.
FIG. 2 is an illustration of a bulk chemical module in accordance with certain embodiments of the present disclosure.
FIG. 3 is an illustration of a dosing module in accordance with certain embodiments of the present disclosure.
FIG. 4 is an illustration of a dechlorination module in accordance with certain embodiments of the present disclosure.
FIG. 5 is an illustration of a control panel in accordance with certain embodiments of the present disclosure.
FIG. 6 is an illustration of a diagram for treating the ballast water in accordance with certain embodiments of the present disclosure.

FIG. 7 is an illustration of a diagram for neutralizing the ballast water in accordance with certain embodiments of the present disclosure.

**DETAILED DESCRIPTION OF THE INVENTION**

The present invention relates to a system and method for treating ballast water. With regards to the present disclosure, embodiments relate to the dispersing of a disinfectant such as liquid sodium hypochlorite (NaOCl), and at times in conjunction with sodium hypobromite (NaOBr), into the ballast water held in tanks to reduce the oxidant levels to a designated amount. In embodiments, the liquid sodium hypochlorite, with or without sodium hypobromite, may be generated onboard a vessel, stored on the vessel, and/or combinations thereof.

In embodiments, a vessel may travel across a body of water in any suitable fashion. The vessel may utilize at least one ballast tank and/or a seawater flooded cargo hold. In other embodiments, the vessel may comprise a plurality of ballast tanks and/or flooded cargo holds, hereafter referred to as a ballast tank. The at least one ballast tank may serve to contain ballast water, wherein the ballast water may be used to provide stability to the vessel and may keep at least a portion of the vessel submerged in the body of water. The ballast water may be pumped into the at least one ballast tank. In embodiments, contamination problems may arise with regards to the ballast water. Organisms may additionally be pumped into the at least one ballast tank and may reside in the ballast water. When the vessel reaches a port, the ballast water, and subsequently the organisms within the ballast water, may be discharged at the port. This may be a new environment for the organisms, and the organisms may negatively affect the surrounding environment.

As discussed further below, the vessel may comprise a ballast water treatment system. The ballast water treatment system may comprise the at least one ballast tank, a treatment unit, a dosing module, at least one mixing nozzle, a pump, and a control panel. In embodiments, the ballast water treatment system may be incorporated into the vessel's existing equipment. The ballast water treatment system may further comprise tank valves and actuators, storage tanks, a seawater pump and motor, a circulation pump and motor, and/or combinations thereof. In operations, the ballast water may be introduced into the at least one ballast tank. The ballast water may be introduced into the at least one ballast tank by any suitable means. In embodiments, the ballast water is pumped into the at least one ballast tank. While the vessel is in transit, the ballast water from a singular ballast tank may be introduced to the dosing module (i.e. pumped through the dosing module). Alternatively, a portion of the volume of the ballast water may be pumped through the dosing module. In embodiments, the treatment unit may be coupled to the dosing module and may comprise an electrochlorination module, a bulk chemical module, a dechlorination module, and/or any combinations thereof. The treatment unit may deliver any suitable disinfectant and/or a neutralizer for the disinfectant to the ballast water through the dosing module. Without limitation, a suitable disinfectant may be NaOCl, NaOBr, and/or combinations thereof.

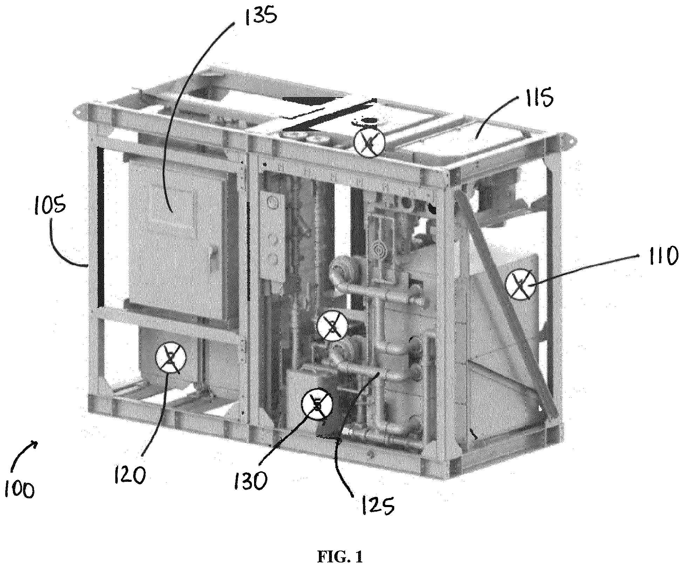

FIG. 1 illustrates an example of an electrochlorination module 100. In embodiments, the treatment unit of the ballast water treatment system may utilize electrochlorination module 100 to generate the disinfectant onboard the vessel. In certain embodiments, there may be a plurality of electrochlorination modules 100. If electrochlorination module 100 is to be used to generate the disinfectant, hydrogen gas may be produced as a by-product of the operation. In embodiments, the hydrogen gas may be vented to the atmosphere. Electrochlorination module 100 may be any suitable size, height, and/or shape. Without limitation, a suitable shape may include, but is not limited to, cross-sectional shapes that are circular, elliptical, triangular, rectangular, square, hexagonal, and/or combinations thereof. Electrochlorination module 100 may be disposed at any suitable area of the vessel, such as a safe area of the vessel. In embodiments, electrochlorination module 100 may be disposed in the engine room, on the deck of the vessel, and/or combinations thereof. Without limitation, electrochlorination module 100 may include any suitable materials such as metals, nonmetals, polymers, ceramics, and/or combinations thereof. Electrochlorination module 100 may comprise an EC frame 105, an electrolytic cell 110, gas removal equipment 115, a transformer/rectifier 120, flow equipment 125, a clean-in-place (CIP) system 130, and a control panel 135.

EC frame 105 may be a support structure that physically reinforces electrochlorination module 100. EC frame 105 may be a singular piece of material, or alternatively, EC frame 105 may comprise a plurality of components coupled to each other. The plurality of components of EC frame 105 may be coupled to each other through the use of any suitable means, including, but not limited to, the use of suitable fasteners, threading, adhesives, welding, and/or combinations thereof. Without limitation, suitable fasteners may include nuts and bolts, washers, screws, pins, sockets, rods and studs, hinges and/or any combinations thereof. In embodiments, the remaining components of electrochlorination module 100 may be disposed within and/or about EC frame 105.

Electrolytic cell 110 may be disposed fully or partially within EC frame 105. Electrolytic cell 110 may comprise an anode and cathode assembly that develops a direct current voltage across a portion of seawater that flows through electrochlorination module 100. In embodiments, electrolytic cell 110 may produce the disinfectant. Such portion of the seawater along with the disinfectant may be pumped into a designated ballast tank for treatment. During operation, seawater may be pumped into and through electrochlorination module 100 with the seawater pump and motor. The conductivity and/or temperature of the seawater may affect the efficiency of electrolytic cell 110. Without limitation, a desired temperature for the seawater may be from about 0 °C to about 35 °C. Further, a desired conductivity of the seawater may be from about 20,000 $\mu$S/cm to about 40,000 $\mu$S/cm, alternatively, from about 22,000 $\mu$S/cm to about 40,000 $\mu$S/cm. In an alternate embodiment, the desired conductivity may be any value greater than or equal to about 22,000 $\mu$S/cm. At operational levels below these pre-determined levels of conductivity and/or temperature, electrolytic cell 110 may continue to operate at a de-rated production capacity, which may result in additional treatment time and additional energy. Further, the quantity of seawater added to the designated ballast tank with the disinfectant may exceed an allowable tolerance (i.e., may exceed about 1% of the ballast tank volume). In an alternate embodiment, an allowable tolerance may be from about 1% to about 5%, or alternatively from about 1% to about 2%.

As previously discussed, hydrogen gas may be produced as a by-product of the generation of the disinfectant. The disinfectant may be generated at the anode, and the hydrogen gas may be generated at the cathode. In embodiments, gas removal equipment 115 may remove hydrogen gas present in electrochlorination module 100. Gas removal equipment 115 may be disposed fully or partially within EC frame 105 of electrolytic cell 110. Gas removal equipment 115 may comprise a degasser, a gas release valve, and one or more dilution blowers. The degasser may separate the hydrogen gas from the disinfectant solution produced by the electrolytic cell 110. The gas release valve may regulate the release of the hydrogen gas and prevent the release of the disinfectant solution. Prior to venting the hydrogen gas to atmosphere with the gas release valve, the hydrogen gas may be diluted with the one or more dilution blowers. The one or more dilution blowers may dilute the hydrogen gas to between about 40% to about 80% of its lower explosive limit or between about 50% to about 70% of its lower explosive limit. Alternatively, the one or more dilution blowers may dilute the hydrogen gas to less than about 60% of its lower explosive limit, or to less than about 50% of its lower explosive limit, or to less than about 40% of its lower limit. In embodiments, the lower explosive limit of the hydrogen gas may be between about 1% and about 4% by volume or between about 2% and 3% by volume. Alternatively, the lower explosive limit of the hydrogen gas may be about 2.4% by volume. In embodiments, the one or more dilution blowers may run for a designated time limit before, during, after, and/or combinations thereof operation of electrochlorination module 100.

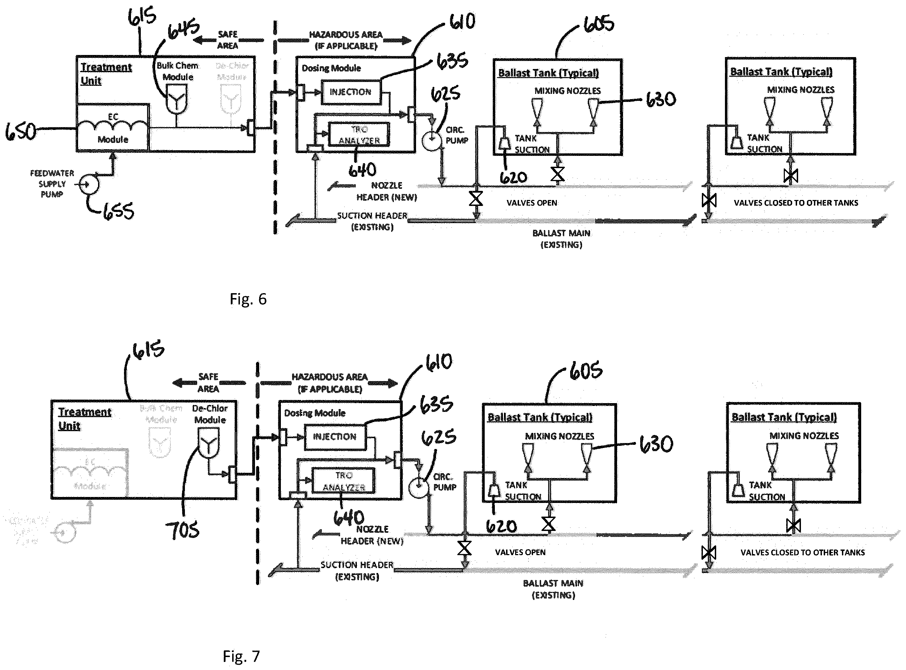

In embodiments, the transformer/rectifier 120 may be disposed fully or partially within EC frame 105. Transformer/rectifier 120 may convert an input of alternating current into a direct current. Transformer/rectifier 120 may also apply the direct current across the electrolytic cell 110. In embodiments, transformer/rectifier 120 may regulate the direct current voltage to achieve the rated disinfectant generating capacity. Transformer/rectifier 120 may be coupled to and controlled by a control panel 135 (discussed further in FIG. 7) disposed about electrochlorination module 100. Transformer/rectifier 120 may be any suitable transformer/rectifier for converting alternating current to direct current. In embodiments, transformer/rectifier 120 during operation may be water-cooled, air-cooled, or any combinations thereof.

The flow equipment 125 may facilitate the flow of the seawater throughout electrochlorination module 100. Flow equipment 125 may comprise a flow transmitter and control valve, a conductivity transmitter, a temperature transmitter, an outlet sight glass, and/or combinations thereof. In embodiments in which transformer/rectifier 120 may be water-cooled, flow equipment may further comprise a coolant pump, and/or a heat exchanger. In embodiments in which transformer/rectifier 120 may be air-cooled, the coolant pump and/or heat exchanger may not be required. The flow transmitter and control valve may validate that the flow rate is within an acceptable tolerance and regulate the flow. Without limitation, the acceptable tolerance may be from about 0.25 m$^3$/hr to about 16 m$^3$/hr, alternatively, between about 0.5 m$^3$/hr to about 8 m$^3$/hr. Any suitable flow transmitter and control valve for such validation may be used. The conductivity transmitter may validate that the seawater feed conductivity is within an acceptable tolerance and signal to control panel 135 to adjust electrolytic cell 110 as desired. An acceptable tolerance is from about 500 $\mu$S/cm to about 100,000 $\mu$S/cm, or alternatively from about 1,000 $\mu$S/cm to about 55,000 $\mu$S/cm. Any conductivity transmitter suitable for such validation may be used. The temperature transmitter may validate that the seawater feed temperature is within an acceptable tolerance and signal to control panel 135 to adjust electrolytic cell 110 as desired. An acceptable temperature tolerance is from about -40 °C to about 200 °C, alternatively from about - 5 °C to about 80°C. Any temperature transmitter suitable for such validation may be used. The coolant pump and heat exchanger may remove heat from the transformer/rectifier 120 through the use of the seawater feed. The outlet sight glass may provide a visual indication of contents leaving the electrochlorination module 100 and confirm that excess hydrogen gas has not passed into the outlet of electrochlorination module 100.

After operation of electrochlorination module 100, CIP system 130 may be used. CIP system 130 may circulate a cleaning solution throughout the interior of electrochlorination module 100. The cleaning solution may be any cleaning solution suitable for cleaning electrochlorination module 100. Without limitation, the cleaning solution may be hydrochloric acid, phosphoric acid, trisodium phosphate, or combinations thereof. In an embodiment, the cleaning solution is hydrochloric acid. CIP system 130 may comprise a storage tank to hold a designated volume of the cleaning solution. In embodiments, electrolytic cells 110 may be designated as being in "standby" and may be cleaned after each completed cycle. CIP system 130 may manage mineral fouling within electrochlorination module 100.

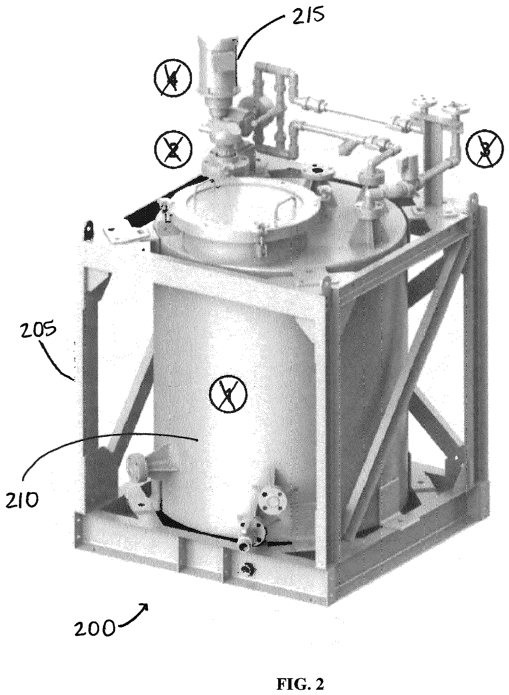

While the treatment unit may generate a disinfectant onboard the vessel with electrochlorination module 100, there may be alternative ways to administer the disinfectant, as illustrated in FIG. 2. In such embodiments, the treatment unit may utilize a bulk chemical module 200 to store and dispense the disinfectant as desired.

FIG. 2 illustrates an example of bulk chemical module 200. In embodiments, the treatment unit of the ballast water treatment system may utilize bulk chemical module 200 to disperse the disinfectant throughout desired areas of the vessel. In certain embodiments, there may be a plurality of bulk chemical modules 200. In embodiments, the ballast water treatment system may utilize electrochlorination module 100 (i.e., referring to FIG. 1) in conjunction with bulk chemical module 200. Bulk chemical module 200 may be any suitable size, height, and/or shape. Without limitation, a suitable shape may include, but is not limited to, cross-sectional shapes that are circular, elliptical, triangular, rectangular, square, hexagonal, and/or combinations thereof. Bulk chemical module 200 may be disposed at any suitable area of the vessel, such as a safe area of the vessel. In embodiments, bulk chemical module 200 may be disposed in the engine room, on the deck of the vessel, and/or combinations thereof. Without limitation, bulk chemical module 200 may include any suitable materials such as metals, nonmetals, polymers, ceramics, and/or combinations thereof. Bulk chemical module 200 may comprise a BC frame 205, a holding tank 210, and a metering pump 215.

BC frame 205 may be a support structure that physically reinforces bulk chemical module 200. BC frame 205 may be similar to EC frame 105 (i.e., referring to FIG. 1). BC frame 205 may be a singular piece of material, or alternatively, BC frame 205 may comprise a plurality of components coupled to each other. The plurality of components of BC frame 205 may be coupled to each other through the use of any suitable means, including, but not limited to, the use of suitable fasteners, threading, adhesives, welding, and/or combinations thereof. Without limitation, suitable fasteners may include nuts and bolts, washers, screws, pins, sockets, rods and studs, hinges and/or any combinations thereof. In embodiments, the remaining components of bulk chemical module 200 may be disposed about BC frame 205.

Holding tank 210 may be disposed fully or partially within BC frame 205. Holding tank 210 may be used to contain the disinfectant prior to injection into the ballast water. Holding tank 210 may be any suitable size, height, and/or shape. Without limitation, holding tank 210 may be capable of containing any suitable volumetric amount of disinfectant. In embodiments, metering pump 215 may be coupled to holding tank 210. As illustrated in FIG. 2, metering pump 215 may be disposed on top of holding tank 210. In embodiments, metering pump 215 may be disposed at any suitable location within and/or about holding tank 210 and/or BC frame 205. Metering pump 215 may provide a means of pumping the disinfectant out of holding tank 210 at a pre-determined rate. Metering pump 215 may be any suitable pump for pumping the disinfectant.

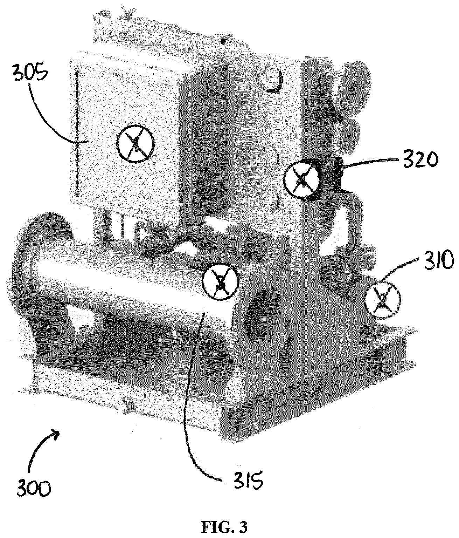

During operation of the treatment unit, wherein the treatment unit may comprise electrochlorination module 100 and/or bulk chemical module 200, the disinfectant may be administered through a dosing module 300 illustrated in FIG. 3. In embodiments, there may be a plurality of dosing modules 300. Dosing module 300 may be any suitable size, height, and/or shape. Without limitation, a suitable shape may include, but is not limited to, cross-sectional shapes that are circular, elliptical, triangular, rectangular, square, hexagonal, and/or combinations thereof. Dosing module 300 may be disposed about the suction of the circulation pump, wherein the circulation pump may be a part of the existing vessel infrastructure. Without limitation, dosing module 300 may include any suitable materials such as metals, nonmetals, polymers, ceramics, and/or combinations thereof. Dosing module 300 may comprise an oxidant analyzer 305, an injection quill 315. In embodiments, dosing module 300 may further comprise a sampling pump 310, pressure transducers and/or gauges 320, or any combinations thereof. Oxidant analyzer 305 may obtain measurements and monitor the oxidant level of a sample of ballast water. Any suitable analyzer may be used. Sampling pump 310 may provide pressure for oxidant analyzer 305 and motive force for draining a sample drain tank with an injector. Any suitable pump may be used. Injection quill 315 may be a pipe connection for injecting oxidant into the ballast water treatment system. Pressure transducers and/or gauges 320 may obtain measurements and monitor the pressure on the suction side of the circulation pump.

In embodiments, dosing module 300 may measure the oxidant level of the ballast water through oxidant analyzer 305. Then, dosing module 300 may apply an initial dose of the disinfectant to a portion of the ballast water, wherein the disinfectant is produced by electrochlorination module 100, administered through bulk chemical module 200, and/or combinations thereof. The initial dose may be injected into the portion of the ballast water until a pre-designated total residual oxidant level is reached and/or a fixed quantity of oxidant is added to a singular ballast tank. The initial dose may be mixed throughout the singular ballast tank via the at least one mixing nozzle. The at least one mixing nozzle may mix the disinfectant throughout the ballast tank to achieve a target total residual oxidant level. Without limitation, the target total residual oxidant level may be between about 0 mg/L and about 8 mg/L, alternatively between about 5 mg/L and about 6.5 mg/L. After the target total residual oxidant level reaches a designated value, the ballast water may be contained within that ballast tank for a specified first hold time, wherein the first hold time is the amount of time in which the ballast water has a designated total residual oxidant level. The first hold time may be any time suitable to satisfy the designated total residual oxidant level. Without limitation, the first hold time may be from about 24 hours to about 60 hours, or alternatively, from about 24 hours to about 36 hours. Further in the alternative, the first hold time may be from about 10 hours to 20 hours, and alternatively from about 1 hour to about 24 hours.

While the current singular ballast tank is undergoing the first hold time, dosing module 300 may administer the disinfectant to another, separate ballast tank in an embodiment in which the vessel comprises a plurality of ballast tanks.

After the first hold time passes in the initial singular ballast tank, the total residual oxidant level may be measured by dosing module 300.

In embodiments, additional disinfectant may be added. The ballast water from the initial singular ballast tank may be circulated back through dosing module 300, wherein a maintenance dose of the disinfectant may be applied. In some embodiments, a portion of the plurality of ballast tanks may receive the maintenance dose prior to the remaining portion of the plurality of ballast tanks receiving the initial dose. After applying the maintenance dose, the ballast water may be mixed throughout the initial singular ballast tank with the at least one mixing nozzle. A second hold time may be applied. Any second hold time may be used that is suitable to reduce oxidant level to a desired level. In embodiments, hold times may be contiguous. Without limitation, the second hold time may be from about 18 hours to about 70 hours, or alternatively from about 24 hours to about 60 hours. Further in the alternative, the second hold time may be from about 30 hours to about 50 hours, and alternatively from about 1 hour to about 72 hours.

After the second hold time passes in the initial singular ballast tank, the total residual oxidant level may be measured by dosing module 300. If the ballast water does not have a designated concentration time (discussed further below), a subsequent maintenance dose may be applied to the ballast water. If the ballast water does have a designated concentration time, a neutralization step may be applied with a dechlorination module.

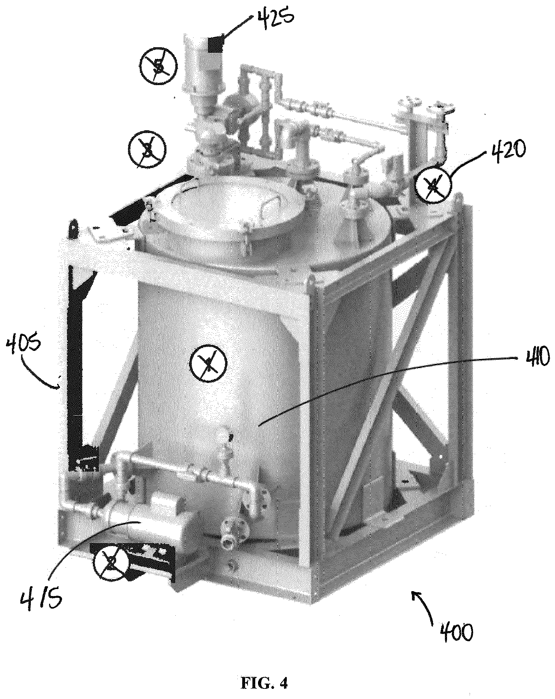

FIG. 4 illustrates an example of dechlorination module 400. In embodiments, the treatment unit of the ballast water treatment system may utilize dechlorination module 400 to disperse a neutralizer throughout the vessel. Any suitable neutralizer may be used. Without limitation, the neutralizer may be sodium thiosulfate (STS), sodium sulfite, sulfur dioxide, sodium metabisulfite, and sodium bisulfite. In embodiments, an STS liquid may be fabricated from sodium thiosulfate anhydrous or sodium thiosulfate pentahydrate. In embodiments, there may be a plurality of dechlorination modules 400. Dechlorination module 400 may be any suitable size, height, and/or shape. Without limitation, a suitable shape may include, but is not limited to, cross-sectional shapes that are circular, elliptical, triangular, rectangular, square, hexagonal, and/or combinations thereof. Dechlorination module 400 may be disposed at any suitable area of the vessel, such as a safe area of the vessel. In embodiments, dechlorination module 400 may be disposed in the engine room, on the deck of the vessel, and/or combinations thereof. Without limitation, dechlorination module 400 may include any suitable materials such as metals, nonmetals, polymers, ceramics, and/or combinations thereof. Dechlorination module 400 may comprise a DC frame 405, a tank 410, a mixing pump 415, a fresh water inlet valve 420, and a DC metering pump 425. Optionally, a freshwater flush line and valve may be added to clear any residual neutralizing agent before layover or before using the same line to dose with bulk chemical.

DC frame 405 may be a support structure that physically reinforces dechlorination module 400. DC frame 405 may be similar to EC frame 105 (i.e., referring to FIG. 1) and/or BC frame 205 (i.e., referring to FIG. 2). DC frame 405 may be a singular piece of material, or alternatively, DC frame 405 may comprise a plurality of components coupled to each other. The plurality of components of DC frame 405 may be coupled to each other through the use of any suitable means, including, but not limited to, the use of suitable fasteners, threading, adhesives, welding, and/or combinations thereof. Without limitation, suitable fasteners may include nuts and bolts, washers, screws, pins, sockets, rods and studs, hinges and/or any combinations thereof. In embodiments, the remaining components of dechlorination module 400 may be disposed within and/or about DC frame 405.

Tank 410 may be disposed within DC frame 405. Tank 410 may be used to mix a bulk neutralizer such as STS with freshwater and to contain the neutralizer prior to injection into the ballast water. Tank 410 may be any suitable size, height, and/or shape. Without limitation, tank 410 may be capable of containing any suitable volumetric amount of neutralizer. In embodiments, mixing pump 415 may provide the force to mix STS with freshwater through a mixing nozzle. Further, the freshwater may enter into tank 410 through fresh water inlet valve 420. Mixing pump 415 may be any suitable pump. Fresh water inlet 420 may be any suitable valve.

In embodiments, DC metering pump 425 may be coupled to tank 410. As illustrated in FIG. 4, DC metering pump 425 may be disposed on top of tank 410. Without limitation, DC metering pump 425 may be disposed at any suitable location about tank 410 and/or DC frame 405. DC metering pump 425 may provide a means of pumping the neutralizer out of tank 410 at a pre-determined rate. DC metering pump 425 may be any suitable pump.

In embodiments, the neutralization step may occur after treatment through actuation of dechlorination module 400 and dosing module 300 (i.e., referring to FIG. 3). The neutralization step may be applied to the ballast water once the desired oxidant level and a desired minimum concentration time have been met. In embodiments, the concentration time may be determined by comparing the product of the residual oxidant measurements and the holding times. Without limitation, the minimum desired concentration time may be about 120 mg-hr/L. Alternative concentration times may be determined by analytical tests and can vary from several minutes to several days depending on the application. The ballast water may be circulated through dosing module 300, wherein dechlorination module 400 may supply the neutralizer to neutralize any remaining oxidant. In embodiments, the neutralizer may be in liquid and/or solid form. The ballast water in the initial singular ballast tank may be treated and may be able to be discharged in accordance with regulation standards. In embodiments, the longer the neutralized ballast water is held in containment, the opportunity for regrowth increases and may place the ballast water in noncompliance for discharge. In embodiments, if the total residual oxidant level is below a desired level, the ballast water may be in compliance for discharge. If the total residual oxidant level is not below the desired level, the ballast water may be treated with a subsequent dose of neutralizer. In some embodiments, the total residual oxidant level may be below 0.1 mg/L and the ballast water may be in compliance for discharge. If the total residual oxidant level is not below 0.1 mg/L, the ballast water may be treated with a subsequent dose of neutralizr. As the initial singular ballast tank completes neutralization, the ballast water treatment system may administer the neutralizer to another separate ballast tank that has met the designated requirements in embodiments in which the vessel comprises a plurality of ballast tanks.

In embodiments, systems and methods may be implemented, at least in part, with a control system. The control system may be capable of processing an analog and/or digital signal. The control system may include any instrumentality or aggregate of instrumentalities operable to compute, estimate, classify, process, transmit, receive, retrieve, originate, switch, store, display, manifest, detect, record, reproduce, handle, or utilize any form of information, intelligence, or data for business, scientific, control, or other purposes. For instance, the control system may include a processing unit, a network storage device, or any other suitable device and may vary in size, shape, performance, functionality, and price. The control system may include random access memory (RAM), one or more processing resources such as a central processing unit (CPU) or hardware or software control logic, ROM, and/or other types of nonvolatile memory. Additional components of the control system may include one or more disk drives, one or more network ports for communication with external devices as well as various input and output (I/O) devices, such as an input device (e.g., keyboard, mouse, etc.) and a video display. The control system may also include one or more buses operable to transmit communications between the various hardware components. In embodiments, control system may comprise at least one remote I/O panel, at least one remote human machine interface (HMI) panel, or any combinations thereof.

Alternatively, systems and methods may be implemented, at least in part, with non-transitory computer-readable media. Non-transitory computer-readable media may include any instrumentality or aggregation of instrumentalities that may retain data and/or instructions for a period of time. Non-transitory computer-readable media may include, for example, storage media such as a direct access storage device (e.g., a hard disk drive or floppy disk drive), a sequential access storage device (e.g., a tape disk drive), compact disk, CD-ROM, DVD, RAM, ROM, electrically erasable programmable read-only memory (EEPROM), and/or flash memory; as well as communications media such as wires, optical fibers, microwaves, radio waves, and other electromagnetic and/or optical carriers; and/or any combination of the foregoing.

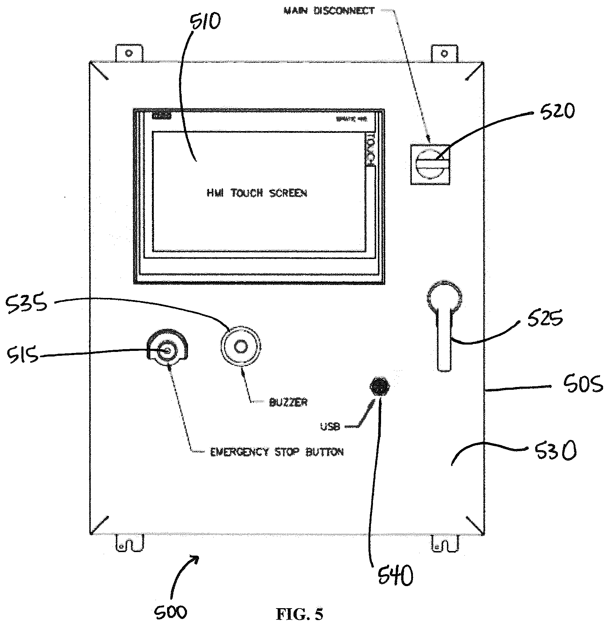

In embodiments, the control system may include alarms to alert an operator of certain events. Further, the control system may include a control panel 500, as illustrated in FIG. 5. Control panel 500 may be any suitable size, height, and/or shape. Without limitation, a suitable shape may include, but is not limited to, cross-sectional shapes that are circular, elliptical, triangular, rectangular, square, hexagonal, and/or combinations thereof. Without limitation, control panel 500 may include any suitable materials such as metals, nonmetals, polymers, ceramics, and/or combinations thereof. Control panel 500 may be disposed at any suitable area of the vessel, such as a safe area of the vessel. In embodiments, control panel 500 may be disposed in the engine room, on the deck of the vessel, and/or combinations thereof. Further, if the ballast water treatment system comprises electrochlorination module 100 (i.e., referring to FIG. 1), then in embodiments control panel 500 may be mounted to electrochlorination module 100. There may be a plurality of control panels 500 within the ballast water treatment system. In embodiments, there may be a main control panel 500 and/or a plurality of remote control panels 500. Each control panel 500 may support a singular piece of equipment. In embodiments, each control panel 500 may be disposed on dosing module 300 (i.e., referring to FIG. 3), the treatment unit, and/or combinations thereof. The plurality of control panels 500 may communicate with each other through a wired and/or wireless network. In embodiments, plurality of control panels 500 may be remote I/O panels, remote HMI panels, or any combinations thereof. Further, plurality of control panels 500 may work in conjunction with a main control panel. Control panel 500 may comprise a housing 505, a screen 510, an emergency stop button 515, a disconnect switch 520, a lever 525, or any combinations thereof. In embodiments, control panel 500 may further include buzzer 535, a USB port 540, or any combinations thereof. In embodiments in which control panel 500 may be an HMI panel, control panel 500 may not have emergency stop button 515. In embodiments, plurality of control panels 500 may communicate via ethernet and or profibus network.

Housing 505 may serve to contain the internal components of control panel 500 from an external environment. Without limitation, the internal components may include electronics, wiring, a controller, and/or combinations thereof. Housing 505 may be any suitable size, height, and/or shape. Without limitation, a suitable shape may include, but is not limited to, cross-sectional shapes that are circular, elliptical, triangular, rectangular, square, hexagonal, and/or combinations thereof. In embodiments, housing 505 may be rectangular. Housing 505 may include any suitable materials such as metals, nonmetals, polymers, ceramics, and/or combinations thereof. Housing 505 may comprise a door 530 that may be actuated to allow access to an internal chamber defined by housing 505.

Screen 510 may serve to be an interface for an operator and may display information to the operator. Screen 510 may be disposed at any suitable location about control panel 500. In embodiments, screen 510 may be disposed on door 530. In embodiments, the operator may input a parameter for the ballast water treatment system into control panel 500 through screen 510. Without limitation, such inputs may include the selection of ballast tanks to be treated, the volume in each ballast tank, the method of treatment for each ballast tank (i.e., electrochlorination or bulk chemical), salinity of the feed water, to neutralize on schedule or at a later time, and/or the like. In embodiments, screen 510 is a color touchscreen. If the ballast water treatment system comprises a plurality of control panels 500, the main control panel 500 may be designated as "in control." In this embodiment, the operator may only input control functions or commands into the screen 510 of the main control panel 500. The operator may view operations on screen 510 of the main control panel 500 or any of the remaining remote control panels 500. The "in control" designation may be transferred from the main control panel 500 to any of the remote control panels 500 with proper authorization.

Emergency stop button 515 may be disposed on control panel 500. In embodiments, emergency stop button 515 may be disposed on door 530. Emergency stop button 515 may be any suitable size, height, and/or shape. There may be an emergency stop button 515 installed on each control panel 500 in proximity to screen 510. In embodiments, an operator may actuate one of the emergency stop buttons 510 to stop operation of the ballast water treatment system.

There may be a disconnect switch 520 installed on each control panel 500. In embodiments, disconnect switch 520 may be disposed on door 530. Disconnect switch 520 may be any suitable size, height, and/or shape. Disconnect switch 520 may serve to disconnect an individual control panel 500 from supply power without accessing the interior of control panel 500. In embodiments, an operator may access the internal chamber of housing 505 of control panel 500 through the use of lever 525. The operator may actuate lever 525 after disconnecting the power to control panel 500 to displace door 530.

The control system may monitor the ballast water throughout the previously described steps, as depicted in diagrams in FIGs. 6 and 7. FIG. 6 illustrates a schematic of an embodiment as to how the disinfectant is injected into the system. FIG. 7 illustrates a schematic of an embodiment in which neutralizing any remaining oxidant by injecting a neutralizer, such as STS, into the system is performed. Without limitation, the control system may calculate and monitor the dose rate for the initial dose and maintenance dose, concentration time, total residual oxidant, first hold time, second hold time, and/or combinations thereof.

FIG. 6 illustrates the flow of ballast water between ballast tank 605 and dosing module 610 as well as its interaction with treatment unit 615. In this particular embodiment, the ballast water is removed from ballast tank 605 using tank suction 620, circulated through dosing module 610 using circulation pump 625, and returned to ballast tank 605 through mixing nozzles 630. During circulation through dosing module 610, disinfectant is delivered to the ballast water at injection point 635 and total residual oxidant (TRO) levels are monitored by TRO analyzer 640. As previously discussed, circulation of and delivery of the disinfectant to the ballast water occurs until a desired TRO level is reached which is measured after certain hold times. The disinfectant is provided by treatment unit 615. At treatment unit 615, the disinfectant may be loaded into and/or stored in bulk chemical module 645 or generated by electrochlorination (EC) module 650. EC module 650 receives seawater with feedwater supply pump 655. In embodiments, ballast tank 605 may comprise multiple ballast tanks, as illustrated in FIG. 6.

The applied dose rate may typically be constant. Application time may be varied to control the quantity of the dose per ballast tank. The control system may automatically adjust the applied dose to each ballast tank to maintain the desired average total residual oxidant concentration for the available hold time. For instance, with an available hold time of 24 hours, the control system may target an average target residual oxidant of 5 mg/L to achieve a concentration time of 120 mg-hr/L. In embodiments, there may be a direct feedback and/or delayed feedback loop for controlling dosing. The following equations may be utilized for either approach to determine concentration time and target total residual oxidant concentrations.

$$Oxidant\ (kg) = \frac{Tank\ Volume \times \Delta TRO}{1000} \qquad (1)$$

$$\Delta TRO\ (mg/l) = \frac{TRO\ Target - Tank\ TRO + Initial\ Demand}{Tank\ Volume\ (m^3)} \qquad (2)$$

In such equations, TRO is the total residual oxidant. For instance, the initial demand may be limited to between about 1 mg/L to about 4 mg/L. As disinfectant starts to flow into a portion of the ballast water as an initial dose, the hold time of a ballast tank may initiate at zero hours (T0) when the measured TRO exceeds average TRO. At the completion of the mixing of the initial dose within a ballast tank, the TRO may be measured to ensure adequate disinfectant has been applied.

$$\text{Measured TRO} \left(\frac{mg}{L}\right) \geq 1.25 \times \text{Average TRO} = \text{Target TRO} \tag{3}$$

$$\text{Average TRO} \left(\frac{mg}{L}\right) = \frac{120}{\text{Available Hold Time}} \tag{4}$$

The Measured TRO may be greater than or equal to the Target TRO to proceed through the next steps. The maintenance dose may occur at the calculated maintenance dose time (MDT) as shown below.

$$\text{Maintenance Dose Time (MDT)}(hrs) = \frac{2}{5} \cdot \text{Available Hold Time} \tag{5}$$

The maintenance dose may proceed with dosing until the control system has sampled a designated number of measurements of the TRO of the ballast water of the ballast tank. If the measurements fall within about +/- 10% to about +/- 30% of each other, alternatively between about +/- 10% and about +/- 20% of each other, or alternatively about +/- 10%, then the maintenance dose may cease, and the concentration time (CT) may be estimated with the control system between the initial dose and the maintenance dose, as shown below.

$$CT \left(\frac{mg}{L} hrs\right) = \int_0^{time} TRO_i \cdot e^{\lambda t} \cdot \delta t = \frac{TRO_i}{\lambda} \cdot (e^{\lambda \cdot time} - 1) \tag{6}$$

The TRO between the initial dose and the maintenance dose may be characterized by an exponential decay function. The "time" variable may be defined as the time between the initial dose and the maintenance dose. Further, lambda may be a function of the natural logarithm of the TRO of the maintenance dose divided by the TRO of the initial dose, wherein the natural logarithm is divided by "time."

The target TRO for the maintenance dose may be calculated to achieve the required CT during the remaining hold time (i.e., the second hold time). The TRO may be assumed to degrade exponentially with an oxidant degradation rate of lambda (defined above). Disinfectant may be applied to the ballast tank to reach the calculated target TRO level as shown below:

$$\text{Target TRO} \left(\frac{mg}{L}\right) = \frac{\lambda \cdot CT}{(e^{\lambda \cdot time_{remaining}} - 1)} \tag{7}$$

$$\text{Remaining CT} \left(\frac{mg}{L} hrs\right) = 120 - \text{Current CT} \tag{8}.$$

After the maintenance dose is applied, mixing of the ballast water within the ballast tank may continue for the longer of the total mixing time or the post-dose mixing time. Treatment completion may then commence, wherein consecutive TRO measurements are acquired to verify that each measurement falls within about +/- 10% to about +/- 30% tolerance, alternatively between about +/- 10% and about +/- 20% tolerance, or alternatively about a +/-10% tolerance. If the CT calculated is above the minimum requirement, that ballast tank may be designated as treated. If the CT is below the minimum requirement, a subsequent maintenance dose may be applied, and the ballast tank may be isolated from about an additional 10% to about an additional 30% of the available hold time, alternatively from about an additional 10% to an additional 20% of the available hold time, or alternatively for about an additional 10% of the available hold time.

In embodiments, the injection of a neutralizer may be necessary in order to neutralize any remaining oxidants in the ballast water. FIG. 7 illustrates the injection process for a neutralizer. Similarly to the flow of ballast water in FIG. 6, the ballast water is removed from ballast tank 605 using tank suction 620, circulated through dosing module 610 using circulation pump 625, and returned to ballast tank 605 through mixing nozzles 630. During circulation through dosing module 610, neutralizer is delivered to the ballast water at injection point 635 and TRO levels are monitored by TRO analyzer 640. As previously discussed, delivery of the neutralizer to the ballast water occurs to neutralize any remaining oxidant in the ballast water and circulation of the ballast water may continue until the remaining oxidants are completely and/or significantly neutralized. The neutralizer is provided by treatment unit 615. At treatment unit 615, the neutralizer may be loaded into and/or stored in dechlorination module 705. In further embodiments, ballast tank 605 may comprise multiple ballast tanks, as illustrated in FIG. 7.

The neutralizer may be applied as a dose until the calculated volume has been delivered to the ballast tank.

$$Neutralizer\ Dose\ (L) = 1.6 \times \frac{Tank\ Volume \times Measured\ TRO}{1000 \times Neutralizer\ Concentration \times Neutralizer\ Density} \qquad (9)$$

Neutralization may be confirmed when a designated number of consecutive measurements of TRO are between about 0.05 mg/L and about 0.1 mg/L, alternatively between about 0.05 mg/L and about 0.08 mg/L, or alternatively below 0.1 mg/L. If the oxidant level exceeds this minimum value, the neutralization process may be repeated. Once the measurements are below the minimum value, the ballast water treatment system may proceed to treat the next ballast tank, if applicable.

Although the present invention and its advantages have been described in detail, it should be understood that various changes, substitutions and alternations can be made herein without departing from the spirit and scope of the invention as defined by the following claims.

**Claims**

1. A method for treating ballast water on a vessel comprising:

   (A) introducing ballast water into at least one ballast tank disposed on the vessel;
   (B) circulating at least a portion of the ballast water between the at least one ballast tank and a dosing module;
   (C) generating a disinfectant via a treatment unit, wherein the treatment unit comprises an electrochlorination module and a dechlorination module; and
   (D) delivering the disinfectant from the treatment unit to the circulating ballast water at the dosing module.

2. The method of claim 1, wherein the treatment unit is coupled to the dosing module, and wherein the dosing module is coupled to the at least one ballast tank.

3. The method of claim 1, wherein the disinfectant comprises liquid sodium hypochlorite (NaOCl), sodium hypobromite (NaOBr), or combinations thereof.

4. The method of claim 1, wherein the treatment unit further comprises a bulk chemical module.

5. The method of claim 4, wherein the electrochlorination module comprises:

   an electrolytic cell;
   a transformer/rectifier; and
   a clean-in-place (CIP) system.

6. The method of claim 4, wherein the electrolytic cell comprises an anode and cathode assembly that develops a direct current voltage across a portion of seawater that flows through the electrchlorination module to generate the disinfectant.

7. The method of claim 5, wherein the CIP system comprises a cleaning storage tank to hold a designated volume of cleaning solution, wherein the CIP system circulates the cleaning solution throughout the interior of the electrochlorination.

8. The method of claim 5, wherein the electrochlorination module further comprises flow equipment and gas removal equipment, wherein the gas removal equipment comprises a degasser, a gas release valve, one or more dilution blowers, or combinations thereof.

9. The method of claim 8, wherein the flow equipment comprises a flow transmitter and control valve, a conductivity transmitter, a temperature transmitter, an outlet sight glass, or combinations thereof.

10. The method of claim 9, wherein the flow equipment further comprises a coolant pump, a heat exchanger, or any combinations thereof.

11. The method of claim 1, wherein the dosing module comprises:

   an oxidant analyzer; and
   an injection quill.

12. The method of claim 11, wherein the dosing module further comprises a sampling pump, a pressure transducer and/or gauge, or any combinations thereof.

13. The method of claim 11, further comprising (E) measuring an oxidant level of the circulating ballast water via the oxidant analyzer, wherein the dosing module delivers the disinfectant until a designated total residual oxidant level is achieved.

14. The method of claim 13, further comprising (F) holding the ballast water in the at least one ballast water tank for a hold time, wherein the hold time is the amount of time in which the ballast water has the designated total residual oxidant level.

15. The method of claim 4, wherein the bulk chemical module comprises a holding tank and a metering pump, wherein the disinfectant is disposed in the holding tank.

16. The method of claim 1, wherein the dechlorination module comprises:

   a tank;
   a mixing pump;
   a fresh water inlet valve; and
   a DC metering pump.

17. The method of claim 16, wherein the tank contains a neutralizer, wherein the neutralizer comprises a form, and wherein the form comprises a liquid, solid, or combinations thereof, wherein the neutralizer is dispersed to the circulating ballast water at the dosing module.

18. The method of claim 14, further comprising (G) controlling steps (B)-(F) via a control system.

19. The method of claim 18, wherein the control system comprises a plurality of control panels.

20. The method of claim 18, wherein steps (B)-(G) are performed while the vessel is in transit.

**FIG. 1**

215

205

210

200

**FIG. 2**

305

320

310

300

315

**FIG. 3**

FIG. 4

*510*

MAIN DISCONNECT

*520*

HMI TOUCH SCREEN

*535*

*515*

BUZZER

*525*

*505*

USB

*530*

EMERGENCY STOP BUTTON

*540*

*500*

**FIG. 5**

Fig. 6

Fig. 7

Europäisches Patentamt
European Patent Office
Office européen des brevets

# EUROPEAN SEARCH REPORT

Application Number

EP 20 15 1809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/130165 A1 (PARK KYUWON [KR] ET AL) 12 May 2016 (2016-05-12) * paragraphs [0015], [0016], [0041], [0046], [0060], [0078] - [0131]; figures 1-3b * | 1-6, 11-18,20 | INV. C02F1/467 C02F1/00 C02F1/76 C02F1/68 |
| X | US 2011/114569 A1 (KIM JUNG SIK [KR] ET AL) 19 May 2011 (2011-05-19) * paragraphs [0001], [0019], [0043] - [0045], [0058], [0065], [0066], [0071], [0094], [0141], [0159] - [0169]; figures 5, 6 * | 1-18,20 | |
| X | WO 2018/102623 A1 (EVOQUA WATER TECH LIMITED [GB]) 7 June 2018 (2018-06-07) * paragraph [0048] - paragraph [0064]; figures 4-8 * * paragraph [0074] - paragraph [0095] * * paragraph [0098] - paragraph [0101] * | 1,6,8, 11,12, 16-19 | |

TECHNICAL FIELDS SEARCHED (IPC)

C02F

The present search report has been drawn up for all claims

| Place of search | Date of completion of the search | Examiner |
|---|---|---|
| The Hague | 4 June 2020 | Wolf, Gundula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 1809

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2020

| Patent document cited in search report | Publication date | Patent family member(s) | Publication date |
|---|---|---|---|
| US 2016130165 A1 | 12-05-2016 | CN 105246837 A<br>EP 2977355 A1<br>JP 6172875 B2<br>JP 2016521200 A<br>US 2016130165 A1<br>WO 2014148867 A1 | 13-01-2016<br>27-01-2016<br>02-08-2017<br>21-07-2016<br>12-05-2016<br>25-09-2014 |
| US 2011114569 A1 | 19-05-2011 | BR PI0911735 A2<br>CN 102105406 A<br>DE 112009001802 T5<br>JP 5475775 B2<br>JP 2011528982 A<br>KR 100883444 B1<br>US 2011114569 A1<br>US 2015307372 A1<br>WO 2010011040 A2 | 06-10-2015<br>22-06-2011<br>09-06-2011<br>16-04-2014<br>01-12-2011<br>17-02-2009<br>19-05-2011<br>29-10-2015<br>28-01-2010 |
| WO 2018102623 A1 | 07-06-2018 | AU 2017367706 A1<br>CN 110213966 A<br>EP 3512340 A1<br>JP 2020515378 A<br>KR 20200036804 A<br>US 2019345045 A1<br>WO 2018102623 A1 | 02-05-2019<br>06-09-2019<br>24-07-2019<br>28-05-2020<br>07-04-2020<br>14-11-2019<br>07-06-2018 |

EPO FORM P0459

For more details about this annex : see Official Journal of the European Patent Office, No. 12/82

**EP 3 683 192 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62792953